# EUROPEAN PATENT APPLICATION

(11) **EP 0 790 733 A2**
(43) Date of publication of application: **20.08.1997**
(21) Application number: 97101755.3
(22) Date of filing: 05.02.1997
(51) Int. Cl.: H04M 3/50, H04M 11/08

(54) **System for the carrying out of interactive services between a central unit and a plurality of users**

(30) Priority: 16.02.1996 IT MI960295
(71) Applicant: Italtel s.p.a., 20149 Milano (IT)
(72) Inventor: Martini, Stefano, 24100 Mozzo (BG) (IT); Pezzotta, Augusto, 24060 Gorlago (GB) (IT)
(74) Representative: Giustini, Delio

(57) **Abstract**

Interactive system for the exchanging of data between a central unit (1) and a plurality of user stations (3) and vice versa, typically for the realization of banking services using a public switched telephone network (POTS).

One part of the data which are emitted by the central unit (1) is transmitted in a coded way through circular diffusion to all users (3), preferably broadcasted on a specific TV channel.

The user connected to the service has access to the information through a SET TOP (30) applied to the home TV set (33) to get information of the general type (promotional information, information concerning market trends, etc.) without payment.

The acquisition of information having a more rigourously private character (current account balance, stock purchase and selling, etc.) is carried out by means of the telephone line (POTS).

## Description

### Field of the invention

The present invention relates to an interactive system for the exchange of informations between a central entity or unit and a plurality of users.

Different services are already known which foresee a remote exchange between a service centre and the users of the services which are connected to this centre through a telephone system, especially through the public telephone network.

A typical system of this type is the so-called "telebanking" or "home-banking", and the invention will be described hereafter with particular reference to this type of services, but without that this may be understood in a limitating sense as it can be used in an large variety of telematic services, also with less rigourous security and reliability needs. Here are mentioned for example stock exchange operations through brokerage companies, insurance services, teleshopping, betting operations and competitions, games, etc.

As already known a home banking service enables the user to use banking/financial services made available by a bank through the telephone line.

### Background art

Systems are known of the semi-automatic type which enable the user to make use of banking/financial services through the use of the telephone and of the multifrequency keys.

Systems for the use of banking/financial services by means of personal computers or video terminals connected to the telephone line through a suitable modem are also known.

Finally systems are known for the use of banking/finalcial services using terminals which employ the TV set as a data visualization monitor, and which are at their turn connected to the telephone line by means of a suitable modem.

A system of this last type is also described in WO 95/11563 which foresees the use of a home TV set for the visualization of data received by the telephone line. The system foresees the use of an interface equipment and of a remote control to make use of the service and the transmission of data to a central data base by the use of the telephone line.

The EP-A-O 093 549 suggests also to use a cable TV network (CATV) for the bi-directional transmission of data between user and a service centre for home banking and teleshopping services.

These already known systems involve various limits and drawbacks.

For example the first one of the above mentioned systems does not allow the recognition of the user and generally does not turn out to be satisfactory for the services requiring a certain level of security, especially for those used as banking/financial services. Moreover, in case the system is not completely automaticed the use of an answering operators is necessary with the consequence of cost and timetable problems.

The second one of the above-mentioned systems is only suitable for users provided with a personal computers or a video terminal, and this implies unneglectable costs and a certain level of specific know-how of the user, and therefore it does not allow a widespread distribution of the services.

The third system, as well as the one described by WO 95/11563, obliges the user to remain linked to the phone line (with the respective costs, in terms of money as well as in terms of traffic congestion) during the total duration of the use of the services with corresponding costs for the user, particularly for what concerns the communication fees.

Regarding EP-A-0 093549, the limits and costs of a dedicated network such as a CATV network, are evident and do not need any specific explanation.

### Objects of the Invention

A first object of the present invention is to realize a system making it possible to implement an interactive service which is completely automatized and appropriately secure for banking and similar services, suitable to offer services to as many users as possible and with acceptable costs for the user, especially referring to the communication costs to be faced by the user in order to use the home banking service at issue.

A second object is that of keeping the cost of the basic equipment for the use of the above-said service as low as possible and that it turns out to be possible to offer services with differentiated levels without the need of specialized technical staff to make the use of the most advanced services possible.

### Summary of the Invention

According to the invention these objects are achieved by an interactive system for the exchange of data between a central unit and a plurality of user stations and vice versa, said user stations being set up by a SET TOP and by a selection keyboard, and said interactive system being of the type where the central unit transmits data to all user stations through the telephone line in response to the reception of selected commands by means of said keyboard provided for at each user station.

The system is characterized in that said central unit transmits a part of the data through a circular diffusion transmission system.

Is also object of the present invention a method for the exchange of data between a central unit and a plurality of user stations and vice versa, said user stations being set up by a SET TOP and a selection keyboard and said interactive system being of the type in which the central unit transmits data to each user station through the public telephone network in response to the received commands selected by means of said keyboard foreseen in each user station,
characterized in that it foresees the steps of:
transmitting in a coded way a part of the data which are emitted by the central unit through a channel common to all users;
decoding the data emitted in a coded way by the central unit at each user station with following visualization on the screen of the home TV set of a series of interactive windows which correspond to the decoded data and which guide the user to use services made available by the central unit;
choosing pre-defined types of services by means of a keyboard foreseen in each user station;
activating a communication between the central unit and the user station by means of the public telephone network.

Using as a terminal the home TV set which receives directly through radio waves (or possibly also through cable if already existing) a part of the data, and using as an "auxiliary" link for the exchange of just the reserved or private data the telephone line (both of them being available to more than 95% of the households) there is a significant synergism.

The solution proposed by the invention is of the global type allowing a broadcast type informative flow of data from a TV station to a user (through radio waves, satellite or cable) and a flow from the user to the bank calculator which takes place on a capillary and wherever available support (twisted pair), possibly with an adequate security level.

Thanks to the use of the TV station, the invention enables the users to find a large quantity of information of general interest free of charge for the users. The use of the telephone network is limited to the cases in which the user intends to acquire data having a strictly private character (for instance the information about the amount of the own current account) or he wants to carry out operations with a strictly private character (for instance selling/buying shares or bonds).

The invention finally foresees that the operators of the different services supply the users with a support on which software and hardware devices are installed to be linked to the decoder using the mechanical solutions according to the standard PCMCIA (also known as PC CARD) as well as a "smart card". The synergism between the basic architecture of the SET TOP, the above-mentioned support and the "smart card" makes it possible to provide the user with services of differentiated level/costs.

Further advantageous characteristics are subject of the appended claims.

### Short description of the figures

The invention, together with further objects and advantages thereof, may be understood with reference to the following description, taken in conjuction with the accompanying drawings, and the several figures of which like reference numerals identify like elements, and in which:
Fig. 1 shows schematically the general topology of the system according to the invention, applied to banking/financial services;
Fig. 2 shows in details the user station; and
Fig. 3 shows the structure of the user's SET TOP.

### Detailed description of a preferred embodiment of the Invention

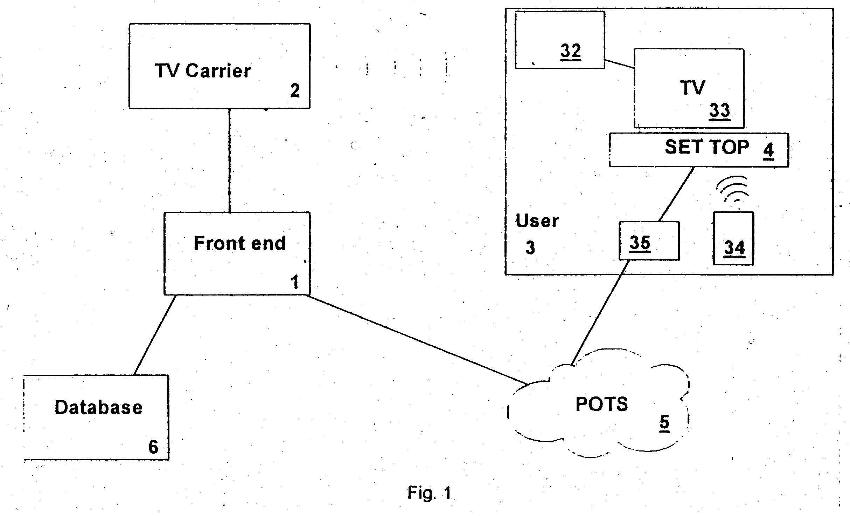

With reference initially to Fig. 1 the system according to the invention foresees a so-called front-end processor 1 connected to the bank's own data systems (6) or in a more general way a service centre which may include several processors for the use of services of the differentiated type, and a plurality of users 3 (only one is represented in the figure) connected to the front end processor 1 through the national telephone network (POTS) 5. The front end processor 1 is connected to (or possibly coincides with) the processor of a bank containing the user data and the necessary software for the supply of the service. According to the invention the front end processor 1 transmits to the own users 3 a structured series of data using as distribution means the data channel of a TV station 2.

The channel used for the transmission of such data is preferable the one known as Teletext, that is the one used for the transmission of data during the intervals associated to the frame returns (standardized system also known as VBI - Vertical Blanking Interval) of the TV signal.

The TV station 2 may be of the ground, satellite or cable type and may operate locally, nationally or internationally according to the importance of the use of the service wanted to realize.

The structural data transmitted by the television station 2 are received by the user 3 together with the television signal (in the case of radio wave transmission through the same receiver antenna 32 of the television signal) separated and interpreted through the SET TOP 30.

The SET TOP 30 visualizes on the TV screen 33 in overlay with respect to the TV pictures a series of correlated windows which guide the user for the use of the service. Such windows contain texts, icons and graphics which may be chosen by the user by means of a cursor preferably controlled by a remote control (34), such as for example of the infrared type.

Such remote control 34 enables the "interactive" use of the home TV set thanks to the interactivity masks in overlay on the screen of the TV set 33. The remote control foresees a keyboard with four directional keys which enable the user to move among the interactivity windows and an alphanumeric keyboard to carry out the personal choices/answers transmitting them to the SET TOP 30 through an infrared transmitter.

Thanks to the above-mentioned diffusion channel set up by the TV station, the user has the possibility to receive by radio waves a large quantity of data concerning basic services free of charge for the user such as for instance the visualization of services offered by a bank etc.

The access to the above-mentioned data concerning the offered services is possible for all users for promotional reasons.

The invention foresees moreover that the user's SET TOP presents a minimal basic equipment in order to keep the prize low and it foresees that the service supplier (banking institute or other) provide the user with a CARD in which software and/or hardware resources are allocated which is preferably connected to the SET TOP using the mechanic solutions foreseen by the standard PCMCIA.

In some cases this support contains just one communication ciphered programme and in other cases a modem operating at a speed suitable to carry out transactions in a short time such as for instance those derived from the management of an investment portfolio belonging either to the band or to the stock sector.

Thanks to the invention, it is therefore possible to allow the access only to the users provided with the above-mentioned specific service card for services which propose for example the real time situation of the domestic and the international market.

It is obviously the task of the different service providers to provide the users with the above-mentioned CARD, free of charge or at a cost defined by them, for the use of services always of general interest as the above mentioned service may be considered.

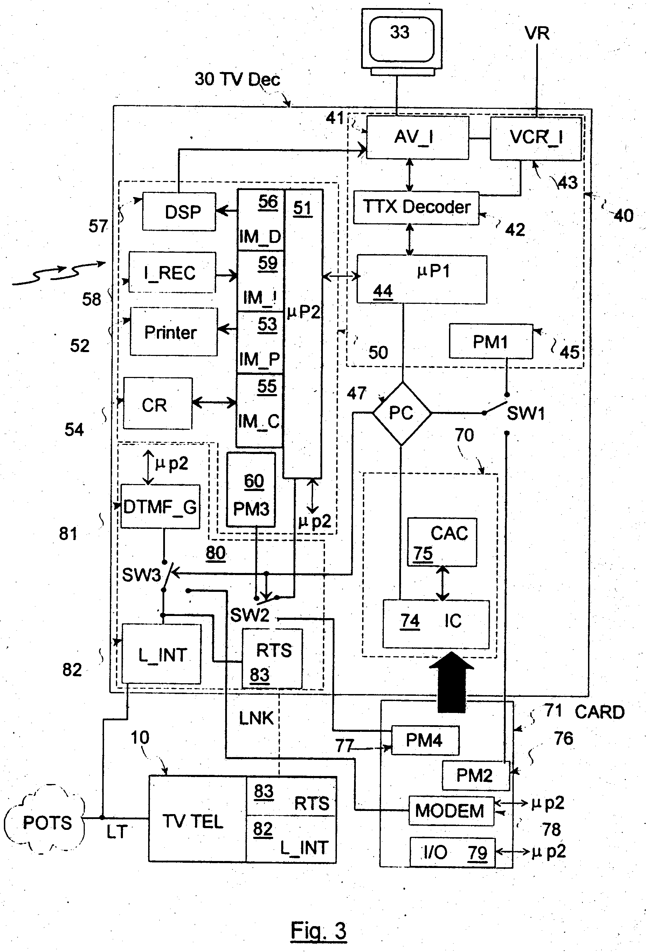

Moreover the invention foresees as further described hereafter with reference to figure 3 that in some cases the service provider supplies the user also with a "smart card" for the use of personalized services and the carrying out of specific interactive activities. Among the personalized services let's mention for example the reception of data regarding the balance of the own current account, etc.

For security reasons the invention foresees furthermore the possibility to carry out a whole series-of congruency checks with different levels such as:
- the congruency check between CARD and the required service (in other words the visualization on the screen of the TV set of icons corresponding to the selected service is only possible, if the CARD corresponding to the supplier offering the service is inserted in the SET TOP;
- the congruency check between CARD and smart card;
- the congruency check between one or more of the above-mentioned checks and a code selected by the user (PIN).

As referred before, according to the invention it turns out possible to transmit at least part of such data to the user by means of the TV station and free of charge for the user, while in case the user wants to get informations of the private type (such as for example informations about the balance of the own current bank account, the purchase of a pre-determined stock or debenture packages, etc.), the invention foresees the use of the telephone line also for privacy reasons and for the purpose of using the television spectrum in an optimized way.

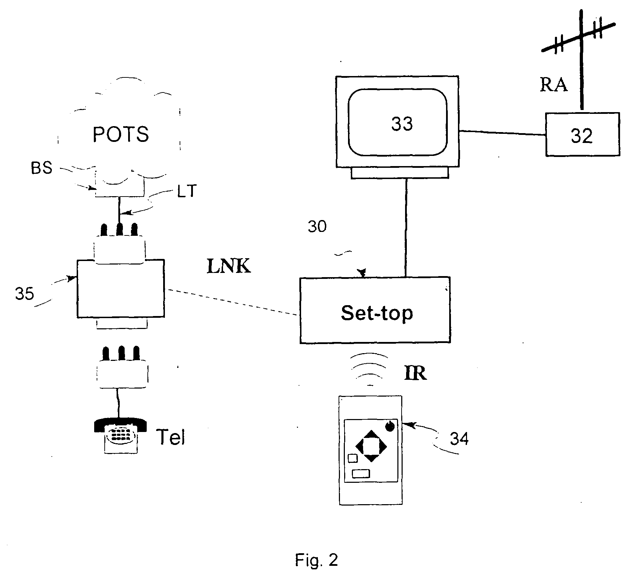

Figure 2 shows in details a user station which comprises said TV set 33 which is connected to a reception antenna 32 and to a SET TOP 30 described in details hereafter with reference to figure 3.

The user has the possibility to transmit to the SET TOP 30 the choices carried out by him through a remote control 34. The SET TOP 30 is connected through a cable to the public telephone line, or as illustrated hereafter with reference to figure 3 by means of a link LNK through a unit 35 which comprises at least one receiver and a line interface.

The unit 35 is preferably autoinstallable type.

With reference to Fig. 3 we will now describe in details the SET TOP 30 of figure 1 and 2 which realizes in fact a terminal operating independently from where the television signal arrives which contains the associated data (the television signal may reach the users by radio waves, satellite or cable).

In fact the SET TOP 30 catches the signal directly from the TV set (and not before the TV set) through a standardized Euro Scart cable which guarantees the passage of the so-called RGB signal. In this way the SET TOP must not necessarily be provided with a tuner, which represents further cost savings and further installation simplicity. In particular the SET TOP 30 is set up in such a way to catch the interactivity data associated to the television signal through a TV interface module 40.

The latter one is provided with an interface 41 of the input/output (Euro-Scart) audio/video signal (AudioVideo_Interface) as well as with a teletext TTX Decoder 42. The television interface module 40 is therefore suitable to catch data transmitted by a TV station provided with a TTX transmission system or the one which uses for data transmission the intervals associated to the frame returns (standardized system known as VBI - Vertical Blanking Interval) of the television signal.

Without departing from the scope of the present invention it is therefore possible to equip the set-top 30 with decoders different from the Teletext Decoder in case the transmission system of the data associated to the television signal used by the television station will be of another standard, as for example the French one.

Preferably the input/output system TTX Decoder 42 of the TTX signal will be of the advanced type allowing to manage texts, icons, fixed and moving graphics.

The television interface module 40 may possibly also comprise an interface towards the video recorder VCR_I 43.

To the TTX decoder 42 a first microcomputer µP1 44 is connected to which a first programme memory PM1 45 turns out to be connected, preferably through a process controller PC 47 which function will become clearer by the following.

The microcomputer 44 is suitable to interpret the received messages and to make appear by the help of the Decoder TTX 42, which acts as text/graphic processor, windows overlaid on the TV screen of the receiver 33, which will guide the subscriber for the participation in interactive events; the transmission of the windows to the subscriber's television set happens through the same audio/video signal interface 41.

The SET TOP 30 comprises moreover a peripheral interface module 50 operated by a second microcomputer µP2 51 which is connected through a serial interface to the microcomputer µP1. All or parts of the functions carried out by the microcomputer µP2 51 can obviously be integrated in the microcomputer µP1 44, and as a consequence the microcomputer µP2 51 may be of reduced dimension or turn out to be absent.
Such peripheral interface module comprises:
1) an integrated mini-printer 52 controlled by the memory IM_P 53; the addition of a standard interface for a printer, or the replacement of the mini-printer by the standard interface for a printer may possibly enable the connection of a traditional external printer to the microcomputer µP2;
2) an integrated smart card reader CR 54, provided with microprocessor and own memory IM_C 55 making it possible to interface cards of the "chip" or "memory" type on which the data concerning the subscriber, the viewed programme etc. are contained; on these cards it is then possible to record updating informations as will be specified in the following;
3) an integrated phonic system, for example realized by a memory IM_D56 and a suitable DSP 57, for the transmission of phonic reply messages to the subscriber;
4) an Infrared RECeiver (I_REC) 58 controlled by the memory IM_I 59 which makes it possible to receive selection/reply messages from the remote control 34 and transmit them to the microcomputer 44, by means of the microcomputer 51, which interprets them and transmits them to the receiver 33, by means of the audio/video signal processor 41.

Some application examples supported by the above-mentioned Smart Card may be:
- Personal Data Card, which contains the user's personal data so that the user may be automatically identified: the user may add by himself (by means of the remote control) the data of the own credit card;
- Fidelity Card, a card which contains a purchase credit granted to the user for the use of a specific service (for example home shopping, booking operations, etc.).

According to the invention the SET TOP 30 is provided with a re-shaping module 70 which makes it possible by means of the use of suitable smart cards CARD 71 to replace some memory parts of the SET TOP 30 on which reside the basic applications by other customized applications and/or enables the replacement of some connected parts of the transmission devices as it will turn out clearer hereafter.

The card 71 is therefore inserted into the interface IC 74 and interpreted by the controller CAC 75 which replaces in the foreseen cases the basic applications contained in the SET TOP 30 with advanced applications contained in the same card 71.

In other words the set top according to the invention is shaped in a way to enable the management of some interactive events using the programmes contained in the memory PM1. For all those interactive events requiring programmes which differ from those stored in the memory PM1 the invention provides for the presence of a second memory PM2 76 allocated in the above-mentioned CARD 71.

For this aim the programme memory PM1 is connected as mentioned above to said process controller PC which is shaped in such way to identify the presence of the above-mentioned CARD 71 and, in a systematical way and/or in the foreseen cases it is set up in a way to activate first switching means SW1 suitable to connect to the bus of the microcomputer µP1 the programme memory PM2 rather than to the programme memory PM1. In these cases obviously the microcomputer µP1 carries out the programmes inserted in the memory PM2.

It will be possible to appreciate the fact that the above-mentioned card reader 71 enables the predisposition for example of a number of CARDs 71 equal to the number of interactive services to be managed each time the microcomputer µP1 carries out the needed prearranged programmes.

Analogously to what referred with reference to the microprocessor µP1 is also preferentially applied with reference to microcomputer µP2 which is also provided with a programme memory PM3 60 which may be inside or outside of the microprocessor itself, and which is connected to second switching means SW2.

These latter ones are controlled by the process controller PC 47 and they are connected to a fourth programme memory PM4 77 provided fore on said CARD 71, and in which are stored the programmes for the concretization of the data exchange towards the interactive event supplier characterized by the applications contained in the memory PM2. In case of interactive events which imply a communication protocol with clear privacy or discretion characteristics in the memory PM4 will also be stored coding applications of the communications addressed towards the supplier of said services.

The SET TOP 30 is likewise equipped according to the invention with a module 80 of communication with the public telephone network POTS in order to link with the different service suppliers. For this reason the communication module 80 comprises a signalling tones generator DTMF_G 81 which is controlled by the above-mentioned second microcomputer µP2 through the wire µP2 and it supplies to a line interface L_INT 82 the data to be transmitted on the public telephone line POTS.

According to the invention in order to contain as much as possible the cost of the SET TOP 30, its basic configuration foresees the use of a tone generator for a DTMF type communication.

As known a communication of the DTMF type is a communication substantially of the unidirectional type with the forwarding in a transmission direction of about 30 Kbit/s and the forwarding in the other transmission direction of, possibly, an acknowledgement message.

To realize interactive services which require a special channel for the communication with the network POTS, for instance of the full-duplex type and at a speed of about 1200 bit/s, the invention foresees to insert in the above-said CARD a MODEM 78 turning out to be connected to third switching means SW3 which receive at the other input the output of said unit DTMF_G. The MODEM 78 is controlled by the microcomputer 51 by means of the wire µp2.

The means SW3 are controlled by said process controller PC which in response to the identification of the presence of CARD 71, and preferentially in a limited way for certain applications, they provide for the connection at the input of the Line interface L_INT the unit MODEM rather than said DTMF DTMF_G generator.

In other words the invention makes it possible to confer to the subscriber three different service levels:
1) The subscriber uses only the programmes included in the memory PM1 to carry out the operations foreseen by the basic configuration of the SET-TOP 30 and uses, as communication program, only the program included in the internal memory of the microcomputer µP2, or included in said external memory PM3, and communicates therefore with the network POTS in DTMF through the unit DTMF_G.
2) The possibility of communication of the subscriber are increased by a software type support conferring to it the possibility to use the programmes included in said memory PM4 after having activated switching means SW2, and communicates with the network POTS always through said unit DTMF_G with more advanced protocols (for example coding ones) with respect to those allocated in the memory PM3.
3) The communication possibilities of the subscriber are furthermore increased by conferring to them the possibility to use, in addition to said software type support, also a hardware type support set up by said MODEM unit.

The invention foresees moreover that said line interface L_INT is connected to the telephone duplex linking up with the network POTS through wire connection means, or it foresees that the unit L_INT is allocated inside of a unit TV TEL 10 for the access to the telephone line which is preferably connected through radio frequency transmission means RTS 83 to said SET TOP.

According to the invention the device RTS 83 for the forwarding of signals and commands to the direct access device 10 has the form of an extractable and replaceable module. In this way different types of connections LNK between the SET TOP 30 and the device 10 may be supported.

For example the extractable module 83 may be set up by a radio frequency transceiver REF suitable for the use with the device TV TEL 10 of the already mentioned Italian patent application nr. MI94A 000874. In alternative the module 83 may include an infrared or ultrasound transceiver or one transmitting through the normal electric power network.

Finally the invention foresees that said CARD 71 has to be provided with connection means to which input output devices 79 to which at their turn for example a printer may be connected.

From the above-mentioned results to be evident that the invention gives the subscriber the possibility to participate in interactive events using the basic configuration of the SET TOP 30, or for special type interactive services the service provider of the above-said services has the possibility to predispose a specific CARD 71 containing integration means for performances of the set-top in order to supply it with software and/or hardware type resources which are necessary to participate in the above-mentioned special type events or service.

The CARD 71 is preferably connected to the configuration module 70 making use of the mechanic according to the standard PCMCIA for which the subscriber once received the above-said CARD from the operator may easily connect it to the own SET TOP without the need of specialized staff.

Application examples which may be supported by smart cards are those referred to home banking service which requires especially secure transmission protocols and coding systems, which are not available in the basic configuration of the SET TOP 30 in order not to raise the cost too much.

The SET TOP 30 is suitable to customize the service with the characteristics of the bank (or the service provider), through the correlation of the data arriving from the television station and other data contained in the CARD. This CARD is therefore provided by each service provider (or by each individual bank) and it contains specific data (trademark, colours, background), available services for each user class, qualification profile of the user to get access to the available services, etc. Moreover the SET TOP is suitable to correlate the data contained in the CARD with the personal data of the user contained in the above-mentioned card of the "smart card" type.

Once all the checks are carried out, at the moment the user makes his choice, the SET TOP starts the set-up procedures to connect the user with the front end processor of the bank 1 by means of the public telephone network through the link LNK (which may be via radio waves, satellite or cable, etc) with the telephone interface 82 of the user towards the network.

The fulfillment of the service happens therefore through a bidirectional communication on the network at adequate transmission speed and with suitable encryption (coding).

The system turns out to be extremely flexible as it allows to convey in the same apparatus for the use of the service - i.e. the SET TOP 30 - general data available for everybody broadcast by the television station, with specific information of the service supplier contained in the CARD, with personal data of the user contained in the personal smart card, and finally with the users private bank information arriving through the telephone network from the processor.

The windows following one after the other, which are connected to each other like a tree or as a matrix, guiding the user for the choice of the wanted service, offers the most simple way to operate from home with the bank. The following services are some examples which a bank may offer with a system according to the invention:
general information: service hours, promotions, bank product conditions;
information for the clients: current account balance, last movements, conditions of the current account and linked services, list of the operations related to the current account, conditions of the file stock-exchange securities, securities contained in the security file; data of the single underwritten certificate of deposit, data concerning the single allocated loan, possibility to leave a message by the client on a single allocated loan, issue of cheques, conditions and purchase limits on credit cards and POS cards;
operations: purchasing and selling of government securities; debentures, and stocks, booking of BOT, credit transfer to an account holder of the same or another bank, periodical credit transfers, underwriting of certificates of deposit with fixed or variable interest rates, ordering of banker's drafts, cancellation and freezing of cheques, application for credit and POS cards, freezing of credit and POS cards, remittance orders for service (Telecom, gas, electricity etc.), freezing of service remittance orders (Telecom, gas, electricity), variation of personal data concerning the place of residence or a specific relation (current account, security file, etc.);
other services of support: freezing of secret code, signaling of the last link, appointment management, various messages to the client (announcement of payments), communication with the operator.

The possibility of using the service while staying comfortably at home in an armchair in front of the TV set, the simple use of a remote control to move from one graphically complete window to the other, the automatism in the set-up of the telephone link with the front end processor and the security supplied by the combination PC CARD/smart card are the strong point in the offer of banking/financial services from home.

With particular reference to the diffusive transmission by the television station, in the case the transmission of the television signal foresees an associated channel according to the Teletext standard, the data will preferably be codified in pages opportunely chosen from the available ones. However the system is suitable to be adapted in a simple way also to other standards, similar to the Teletext one, existing in other countries or in other technological solutions (digital television).

Although the invention has been described with particular reference to a preferred embodiment, it should be understood that the present invention is not limited thereto since other embodiments may be made by those skilled in the art without departing from the scope thereof. It is thus contemplated that the present invention encompasses any and all such embodiments covered by the following claims.

## Claims

1. Interactive system for the exchange of data between a central unit (1) and a plurality of user stations (3) and vice versa, said user stations including
a television set (33),
a SET TOP (30) and
a selection keyboard (34), and
said interactive system being of the type in which the central unit (1) transmits data to each user station (3) through the public telephone network (POTS) in response to the reception of selected commands by means of said keyboard (34) which is foreseen in all user stations (3),
characterized in that
said central unit (1) transmits part of said data by means of a broadcasting transmission system.

2. System according to claim 1, characterized in that said broadcasting transmission includes the transmission of a television signal with associated interactivity data broadcasted by a fixed station (2), or retransmitted by a satellite, to said user station (3).

3. System according to claim 1, characterized in that said broadcasting transmission includes the transmission of a television signal, with associated interactive data, broadcasted via cable to said user station (3).

4. System according to claim 1, characterized in that said SET TOP (30) includes a smart card reader and recofiguration means (70) suitable to receive a support (CARD) on which software and/or hardware devices are installed.

5. System according to claim 4, characterized in that said SET TOP (30) includes also a microprocessor (µP1, µP2) and a process controller (PC), the latter being suitable to reveal the connection of said support (71) to the SET TOP (30), and also suitable to activate first switching means (SW1 or SW2) causing the connection to said at least one microprocessor (µP1, µP2) of the software devices (PM2 and/or PM4) installed on the support (71) itself.

6. System according to claim 5, characterized in that said process controller (PC) is also suitable to activate second switching means (SW3) causing the connection to said public telephone network (POTS) of the hardware devices (78) installed on said support (71).

7. System according to claim 6, characterized in that said hardware devices (78) are a modem (MODEM).

8. System according to claim 2 or 3, characterized in that said interactivity data transmitted by the central unit (1) to the user stations (3) are transmitted during the vertical blanking interval of the television signal.

9. System according to the previous claims, characterized in that said central unit (1) is the front end processor of a bank and that said data are related to banking or financial services.

10. System according to claim 4, characterized in that said support (CARD) includes connection means to which input/output means are connected (79).

11. Method for the exchange of data between a central unit (1) and a plurality of user stations (3) and vice versa, these user stations including
a television set (33),
a SET TOP (30) and
a selection keyboard (34),
said interactive system being of the type in which the central unit (1) transmits data to each one of the user stations (3) through the public telephone network (POTS) in response to the reception of selected commands through said keyboard (34),
characterized in that it includes the following steps:
transmitting in a coded way part of said data to be emitted by the central unit (1) through a broadcast channel (TV station) which is common to all users (3);
decoding the data emitted by the central unit (1) in a coded way in each one of the user stations (3) and visualizing on the screen of the home television. set a series of interactive windows which correspond to the decoded data and which guide the user for the use of the services made available by the central unit (1);
selecting pre-defined types of services through said keyboard (34) foreseen in each user stations (3);
activating of a bidirectional communication between a central unit (1) and a user station (3), through the public telephone network (POTS).

12. Method according to claim 11, characterized in that it includes also the steps of:
associating to said SET TOP (3) a support (71) containing software and/or hardware devices;
associating to said support a "smart card".

13. Method according to the claims 11 and 12, characterized in that it includes moreover the steps of carrying out at least one congruency check.

14. Method according to claim 13, characterized in that said congruency check consists in the checking of the congruency between the service pre-selected by the user through said selection keyboard (34) and the content of said support (CARD).

15. Method according to claim 13, characterized in that said congruency check consists in the checking of the congruency between the content of said support (CARD) and the content of said "smart card".

16. Method according to claim 13, characterized in that said congruency check consists in the checking of the content of said "smart card" and a code (PIN) selected by the user.

17. Method according to claim 11, characterized in that said broadcast channel is set up by a television channel received by the users (3), in which the data to be emitted in a coded way by the central unit are set up by data transmitted in the intervals associated to the frame returns of the television signal (Teletext standard).
